# EUROPEAN PATENT APPLICATION

(11) **EP 4 343 570 A1**
(43) Date of publication of application: **27.03.2024**
(21) Application number: 21940410.0
(22) Date of filing: 17.08.2021
(51) Int. Cl.: G06F 16/242

(54) **METHOD FOR DETECTING SPATIAL DATA CHANGE IN TERRITORIAL SPATIAL PLANNING, APPLICATION SYSTEM, AND CLOUD PLATFORM**

(30) Priority: 20.05.2021 CN 202110549437
(71) Applicant: Sichuan Forestry and Grassland Investigation and Planning Institute (Sichuan Forestry and Grass- land Ecological Environment Monitoring Center), Chendu, Sichuan 610081 (CN); Sichuan Forestry Survey, Design and Research Institute Co., Ltd, Chengdu, Sichuan 610081 (CN); Kunming Survey and Design Institute of State Forestry Administration, Kunming, Yunnan 650031 (CN); Chengdu Academy of Agricultural and Forestry Sciences, Chengdu, Sichuan 611100 (CN)
(72) Inventor: GAO, Fei, Chengdu, Sichuan 610081 (CN); LI, Nana, Chengdu, Sichuan 610081 (CN); ZHANG, Chengcheng, Kunming, Yunnan 650031 (CN); WANG, Yongjun, Chengdu, Sichuan 611100 (CN); HUANG, Bei, Kunming, Yunnan 650031 (CN); LI, Hua, Kunming, Yunnan 650031 (CN); XU, Xianpeng, Kunming, Yunnan 650031 (CN)
(74) Representative: Novagraaf Technologies
(86) International application number: PCT/CN2021/113085
(87) International publication number: WO 2022/241961

(57) **Abstract**

The present invention relates to a method, an application system, and a cloud platform for detecting abrupt changes in spatial data for national territorial spatial planning, wherein the steps in the method for detecting abrupt changes in spatial data for national territorial spatial planning include pre-processing data for detecting abrupt changes and detecting abrupt changes; the application system applies the method for detecting abrupt changes in spatial data for national territorial spatial planning, so as to carry out the abrupt change detection; and the cloud platform is deployed with the application system. In the implementation of technical solution of the present invention, after pre-processing by a higher-level user, all comparison computations are based on a comparison of attribute data, and the efficiency is higher by an order of magnitude than that of graphical computations, which has the advantages of low computational consumption and high efficiency. In addition, a spatial planning cloud support platform is used to carry out computations in a distributed manner, which not only reduces the workload of a higher-level spatial planning management department, but also shortens the process and time for a submission for review to the cloud client by a lower-level spatial planning and compilation department; secondly, it can ensure the accuracy of the spatial data for national territorial spatial planning and correct spatial data tampering caused by mis-operation at any time in a timely manner.

## Description

### TECHNICAL FIELD

The present invention belongs to the technical field of geospatial data calculation, marking and processing, and specifically relates to a method, an application system and a cloud platform for detecting abrupt changes in spatial data for national territorial spatial planning.

### BACKGROUND

The national territorial spatial planning operation system horizontally covers various departments such as the mapping, natural resources, development and reform, environmental protection, housing and construction, transportation, water conservancy, agriculture and forestry departments, and vertically penetrates through the national, provincial, municipal, county and township, these five levels. When using spatial data for national territorial spatial planning, inconsistencies of the same spatial data for national territorial spatial planning in graphic shapes, attribute information, number of records, spatial coordinate systems and so on between different levels or different departments often occur due to version control errors, data editing mishandling or user malicious tampering, which is known as abrupt changes in spatial data for national territorial spatial planning. It is a prerequisite for all departments at all levels to effectively carry out detection works of abrupt changes in spatial data for national territorial planning, so as to ensure the consistency and accuracy of data for national territorial spatial planning across all departments at all levels before implementing national territorial spatial planning, which is also an important and fundamental task throughout the early, middle and final stages of the national territorial spatial planning work. The spatial data for national territorial spatial planning in the present invention mainly refer to space vector layer data that are synchronously used at the national, provincial, municipal, county and township levels as a result of the Third National Land Survey, the "One Map Plan" for Forest Resources Management, the National Geography Census, the Ecological Protection Red Line Plan, Permanent Basic Agricultural Land Plan, Urban Development Boundary Plan and so on.

At present, the method mainly employed for detecting abrupt changes in national territorial spatial planning data is that a higher-level user performs spatial geographic processing, such as space union analysis (Union), space intersect analysis (Intersect), space reverse intersection (Symmetrical Difference) and so on, using a space vector layer in possession of the higher-level user with a spatial vector layer result submitted by a lower-level user, so as to obtain a new space vector layer having two space vector layer attribute fields information at the same time, and determine whether the space vector layer submitted by the lower-level user has abrupt changes by comparing the number of map spots, and the field type and field value of the attribute fields before and after with the same name in the new space vector layer. However, such a method has the following major disadvantages: firstly, the computing power consumption is high, as joined operation and computation for graphic patterns are required in order to determine changes in graphic patterns; meanwhile, the comparison of graphic patterns requires high computing power, and it is also time-consuming; secondly, there is poor timeliness, as the lower-level department must complete all planning works and submit the results before data can be inspected, and if at this point error occurs, all works have to be redone. Thirdly, the work is centralized, and the higher-level department needs to compare the data of each lower-level department individually for graphical comparison and attribute comparison and when there are many lower-level departments or many attribute fields, the higher-level department will be under great pressure.

In response to the drawbacks of detecting abrupt changes in spatial data for national territorial spatial planning in the prior art, there is an urgent need to provide a method, an application system and a cloud platform for detecting abrupt changes in spatial data for national territorial spatial planning that can achieve early detection of abrupt changes in spatial data for national territorial spatial planning, fast calculation, analysis, comparison and distributed management, and ensure the consistency and accuracy of national territorial spatial planning data across various departments and at all levels.

### SUMMARY

The purpose of the present invention is to provide a method, an application system and a cloud platform for detecting abrupt changes in spatial data for national national territorial spatial planning, which can achieve early detection of abrupt changes, fast calculation, analysis comparison, and distributed management, and ensure consistency and accuracy of national territorial spatial planning data across all departments and at all levels.

The above purpose is achieved through the following technical solution: a method for detecting abrupt changes in spatial data for national territorial spatial planning, comprising the steps of:
(1) pre-processing data for detecting abrupt changes: spatial data for national territorial spatial planning for controlling abrupt changes by a higher-level user and spatial data for national territorial spatial planning requested for comparison by a lower-level user are both converted by a space vector layer to an attribute database containing unique identification information:
   (1.1) respectively adding five fields namely, ID, X, Y, shape feature value, and coordinate system description to a space vector layer in the spatial data for national territorial spatial planning for controlling abrupt changes by the higher-level user and a space vector layer in the spatial data for national territorial spatial planning requested for comparison by the lower-level user, wherein the ID field is of a text type, the X field and the Y field are of an integer type, the shape feature value field is of a double precision type, and the coordinate system description field is of a text type;
   (1.2) calculating the X field as a horizontal coordinate value of the centroid of each element in the space vector layer, the Y field as a vertical coordinate value of the centroid of each element in the space vector layer, the shape feature value field as a pattern associated value of each element in the space vector layer, and the ID field as a combined string of the X field, the Y field, and the shape feature value field connected using a hyphen, wherein the ID field is the unique identification information;
   (1.3) calculating the coordinate system description fields of the space vector layer for controlling abrupt changes and the space vector layer requested for comparison as space coordinate system names of the space vector layers;
   (1.4) combining the space vector layer for controlling abrupt changes and an attribute field for controlling abrupt changes required by the higher-level user by the ID field to form an abrupt-change-control attribute database that contains unique identification information; and combining the space vector layer requested for comparison by the lower-level user and an attribute field requested for comparison by the lower-level user by the ID field to form a comparison-request attribute database that contains unique identification information;
(2) detecting abrupt changes: connecting the abrupt-change-control attribute database and the comparison-request attribute database by the unique identification information, and detecting records and causes for abrupt changes through quantity counting and attribute comparison, which are compiled into an abrupt-change-detection result database;
   (2.1) counting the number of records in the comparison-request attribute database of the lower-lever user;
   (2.2) obtaining the abrupt-change-control attribute database of the higher-level user, counting the number of records in the abrupt-change-control attribute database, comparing the number of records in the comparison-request attribute database with the number of records in the abrupt-change-control attribute database, determining whether the comparison result is consistent; if inconsistent, then determining that abrupt changes have occurred in the spatial data for national territorial spatial planning requested for comparison by the lower-level user, and recording the cause for such abrupt changes as "inconsistent number of map spots", and then registering and compiling the causes for such abrupt changes into the abrupt-change-detection result database; and if consistent, then proceeding to step (2.3);
   (2.3) performing a left join query with respect to the abrupt-change-control attribute database and the comparison-request attribute database using the ID field with unique identification information:
      (2.3.1) determining whether all records in the abrupt-change-control attribute database have corresponding values in the comparison-request attribute database; if not, then determining that abrupt changes have occurred in the spatial data for the national territorial spatial planning requested for comparison, and recording the cause for such abrupt changes as "ID fields are not in one-to-one correspondence", and then compiling the ID values of the abrupt-change-control attribute database that do not have corresponding values and the causes for such error into the abrupt-change-detection result database;
      (2.3.2) reading an attribute field required by a higher-level user for controlling abrupt changes in the abrupt-change-control attribute database, searching for a field of the same name in the comparison-request attribute database, and reading the field type and field value: determining whether the name of the attribute field required by a higher-level user for controlling abrupt changes in the abrupt-change-control attribute database matches that in the comparison-request attribute database; if inconsistent, then determining that abrupt changes have occurred in the spatial data for national territorial spatial planning requested for comparison, and recording the cause for such abrupt changes as "missing required field name", and then compiling the current ID value of the comparison-request attribute database and causes for such error into the abrupt-change-detection result database;
      (2.3.3) determining whether the field type of the attribute field required by the higher-level user for controlling abrupt changes in the abrupt-change-control attribute database is consistent with the field type of a field with the same name in the comparison-request attribute database; if inconsistent, then determining that abrupt changes have occurred in the spatial data for national territorial spatial planning requested for comparison, and recording the cause for such abrupt changes as "inconsistent field type of the required factor field", and then compiling the current ID value of the comparison-request attribute database and causes for such error into the abrupt-change-detection result database;
      (2.3.4) determining whether the precision of the attribute field required by the higher-level user for controlling abrupt changes in the abrupt-change-control attribute database and a field of the same name in the comparison-request attribute database are consistent; if inconsistent, then determining that abrupt changes have occurred in the spatial data for national territorial spatial planning of the space vector layer requested for comparison, and recording the cause for such abrupt changes as "inconsistent precision of the required factor field", and then compiling the current ID value of the comparison-request attribute database and causes for such error into the abrupt-change-detection result database;
      (2.3.5) determining whether the field value of the attribute field required by the higher-level user for controlling abrupt changes in the abrupt-change-control attribute database is consistent with the field value of a field with the same name in the comparison-request attribute database; if inconsistent, then determining that abrupt changes have occurred in the spatial data for national territorial spatial planning of the space vector layer requested for comparison, and recording the cause for such abrupt changes as "inconsistent field value of the required factor field", and then compiling the current ID value of the comparison-request attribute database and causes for such error into the abrupt-change-detection result database;
   (2.4) reading the value of the coordinate system description field of the abrupt-change-control attribute database and comparing same with the value of the coordinate system description field of the comparison-request attribute database, then determining whether the value of the coordinate system description field of the comparison-request attribute database is consistent with the value of the coordinate system description field of the abrupt-change-control attribute database; if inconsistent, then determining that abrupt changes have occurred in the spatial data for national territorial spatial planning requested for comparison, and recording the cause for such abrupt changes as "inconsistent coordinate system description information", and then registering and compiling the cause for such abrupt changes into the abrupt-change-detection result database; and
   (2.5) outputting records of the abrupt-change-detection result database.

It should be noted that the element described in step 1.2 refers to a piece of information in the space vector layer, which includes spatial information and attribute information. In addition, each space vector layer has a spatial coordinate system, and this spatial coordinate system consists of coordinate system name, central meridian, geographic coordinate system, etc. The coordinate system name of the coordinate system in step 1.3 is calculated as a coordinate system description field for storage, which is used for subsequent comparison. The ID, X, Y, shape feature value, and coordinate system description fields added in step 1.4 are used to detect the changes in spatial data patterns, but some attribute fields in the spatial data for national territorial spatial planning should also be controlled, which is determined by the specific situation. At this point, the attribute fields required for controlling abrupt changes need to be selected, and then these are selected together with the ID, X, Y, shape feature value, and coordinate system description fields to form an attribute database. The record in step 2.1 refers to a piece of information in the attribute database, which includes only the attribute information, and does not include the spatial information. Therefore, the records are different from the elements.

A further technical solution is that, in said step (1.2), the type of the space vector layer for controlling abrupt changes and space vector layer requested for comparison in the spatial data for national territorial spatial planning is determined, and if the space vector layer is a polygon layer, then the shape feature value field is calculated as the area of a space vector layer element, and if the space vector layer is a line layer, then the shape feature value field is calculated as the length of a space vector layer element; while if the space vector layer is a point layer, then the shape feature value field is calculated as a null value.

A further technical solution is that, steps of encrypting the abrupt-change-control attribute database are further included between said step (1) and step (2):
S 1 the lower-level user submits a request for detecting abrupt changes, and submits a layer name of the space vector layer requested for comparison, and the user name and a user password in ciphertext of the lower-level user as parameters to the high-level user;
S2 the higher-level user carries out authentication of the request submitted by the lower-level user, and uses the user name and the user password in ciphertext submitted by the lower-level user to look up and compare in a user system of the higher-level user, and terminates the process directly if the authentication fails;
S3 after the authentication is successful, the higher-level user obtains an abrupt-change-control attribute database with the same name as the space vector layer requested for comparison by the lower-level user in the abrupt-change-control attribute databases;
S4 the higher-level user initializes a symmetric encryption object using the user password in ciphertext of the lower-level user;
S5 the higher-level user encrypts the obtained abrupt-change-control attribute database by using the encryption object;
S6 the higher-level user outputs the abrupt-change-control attribute database stored in ciphertext;
S7 the higher-level user transmits the abrupt-change-control attribute database stored in ciphertext to the lower-level user;
S8 the lower-level user locally stores the abrupt-change-control attribute database stored in ciphertext obtained from the high-level user;
S9 the lower-level user reads the local user password in ciphertext, and initializes the symmetric encryption object, at which point the algorithm employed by the encryption object is the same as in S4;
S10 the obtained abrupt-change-control attribute database is decrypted using the encryption object; and
S11 plaintext results of the abrupt-change-control attribute database are obtained and stored.

The present invention has further provided an application system characterized in that said application system is used for data processing using the aforementioned method for detecting abrupt changes in spatial data for national territorial spatial planning, comprising a cloud client application system and a cloud server application system, and said cloud client application system comprising: a user login module for user registration and login to the cloud client application system; an import and pre-processing module for a space vector layer requested for comparison for a user to import a local space vector layer requested for comparison according to a list of spatial data that must be used according to the requirements of national territorial spatial planning, and completing pre-processing of the imported data after completing such import, and providing error notifications for missing spatial data that have not been imported; a spatial data decryption module for decrypting the abrupt-change-control attribute database stored in ciphertext that has been requested to be obtained using the user password in ciphertext as a private key, and obtaining and storing the plaintext results of the abrupt-change-control attribute database; a spatial data abrupt changes detection module for comparing the comparison-request attribute database with the obtained abrupt-change-control attribute database in terms of spatial patterns, attribute factors and coordinate systems, and detecting whether there are abrupt changes in the spatial vector layer requested for comparison; and a spatial data abrupt changes detection result export module for a user to export the abrupt changes detection results.

A further technical solution is that, said spatial data abrupt changes detection module comprises: a spatial pattern abrupt changes detection module for detecting the number of map spots and inconsistencies in patterns; an attribute data abrupt changes detection module for detecting attribute field names, types, precisions and inconsistencies in attribute values; and a coordinate system abrupt changes detection module for detecting inconsistent coordinate system description information.

A further technical solution is that, said cloud server application system comprises: a user login module for user registration and login to the cloud server application system; an abrupt changes control space vector layer import module for a user to import a user's local space vector layer for controlling abrupt changes according to a list of spatial data required for controlling abrupt changes by national territorial spatial planning; an abrupt-change-control attribute database generation module for a user to select a space vector layer for controlling abrupt changes and the attribute fields required for controlling abrupt changes in each space vector layer for controlling abrupt changes, completing pre-processing of imported data, and generating an abrupt-change-control attribute database; an abrupt-change-control attribute database encryption module for using the obtained lower-level user password in ciphertext as a private key to symmetrically encrypt the contents of the abrupt-change-control attribute database when receiving a request for accessing and obtaining the abrupt-change-control attribute database, and encrypting the abrupt-change-control attribute database into an abrupt-change-control attribute database stored in ciphertext before transmission; and a user management module for storing and managing user information including user names and passwords of the cloud application system and the cloud server application system, wherein the user password is stored in the form of a ciphertext.

The present invention has further provided a cloud platform system, characterized in that the application system according to any of the foregoing aspects is deployed, comprising: a cloud client deployed with said cloud client application system; a cloud server deployed with said cloud server application system, so as to provide data comparison services for the cloud client application system; and a cloud support platform for providing computing, storage, network communication and system operation capability support for the cloud client application system and cloud server application system.

A further technical solution is that, said cloud client comprises and is not limited to a PC, mobile laptop, and computing and storage terminals in a graphics workstation deployed with the cloud client application system.

A further technical solution is that, said cloud support platform comprises an X86 computing server for building a pool of computing resources, a storage server for building a pool of storage resources, a network server and gateway device for building a pool of network resources, virtualization platform software for virtualization management of resources, and one or more application platforms for deploying operating systems, database platforms, GIS platforms, and network middleware on the platform.

Compared with the prior art, the present invention has the following advantages:
1. The timeliness is high. As data pre-processed by a higher-level user are stored in a cloud service application system on a cloud support platform, the comparison work is only submitted unilaterally from the cloud by a lower-level user without the need for any further manual participation of the higher-level user, and a cloud client can submit a comparison request at any time according to the demand, so as to ensure the accuracy of the spatial data for the national territorial spatial planning used at an early stage of the work, and spatial data tampering caused by mis-operation may also be corrected at any time at the early stage of work.
2. The computing consumption is low and efficiency is high. After pre-processing by a higher-level user, all comparison computations are based on data comparisons between the attribute databases and are executed using SQL statements from a relational database, which is an improvement by an order of magnitude in terms of efficiency comparing with graphical computations.
3. The workload is shared. A centralized spatial comparison and attribute comparison work carried out previously by a higher-level user is computed in a distributed manner by using a cloud client application system and cloud server application system deployed by the cloud support platform, thereby reducing the workload of the higher-level user when accepting comparison requests, and shortening the process and time for handling comparison requests for review submitted by the lower-level user.

### BRIEF DESCRIPTION OF THE DRAWINGS

The accompanying drawings which form part of the present invention are used to provide a further understanding of the present invention, and the schematic embodiments of the present invention and their descriptions are used to explain the present invention and not to constitute an undue limitation to the present invention.
FIG. 1 is a schematic diagram of a process for pre-processing data for detecting abrupt changes in an embodiment of the present invention.
FIG. 2 is a schematic diagram of a process for detecting abrupt changes in spatial data for national territorial spatial planning in an embodiment of the present invention.
FIG. 3 is a schematic flow diagram of a method for encrypting and processing an abrupt-change-control attribute database in an embodiment of the present invention.
FIG. 4 is a block diagram of a structure of a cloud client application system in an embodiment of the present invention.
FIG. 5 is a block diagram of a structure of a cloud server application system in an embodiment of the present invention.
FIG. 6 is a schematic diagram of a process for generating an abrupt-change-control attribute database in an application system in an embodiment of the present invention.
FIG. 7 is a schematic diagram of a process for detecting and analyzing abrupt changes in a space vector layer requested for comparison in an application system in an embodiment of the present invention.
FIG. 8 is a block diagram of a structure of a cloud platform in an embodiment of the present invention.

### DETAILED DESCRIPTION

The following is a detailed description of the present invention in corporation with the accompanying drawings. The description in this part is only illustrative and explanatory and should not impose any limitations on the scope of protection of the present invention. In addition, a person skilled in the art may combine features in the embodiments described herein accordingly, and also in different embodiments based on the disclosure herein.

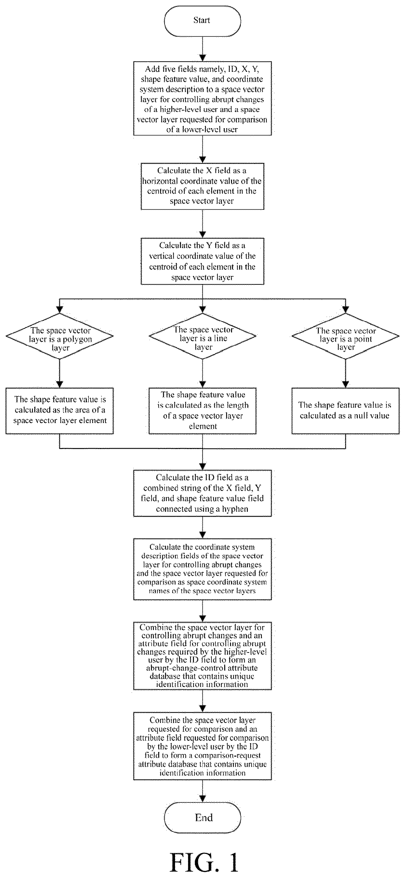

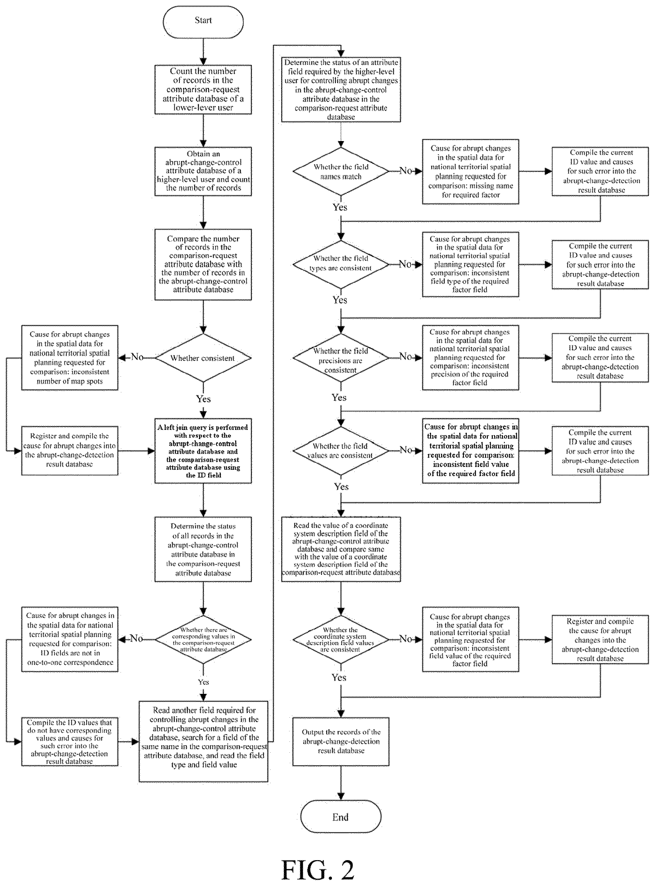

An embodiment of the present invention is as follows, with reference to FIGS. 1 to 2, a method for detecting spatial data abrupt changes in national territorial spatial planning, including the steps of:
(1) pre-processing data for detecting abrupt changes: spatial data for national territorial spatial planning for controlling abrupt changes by a higher-level user and spatial data for national territorial spatial planning requested for comparison by a lower-level user are both converted by a space vector layer to an attribute database containing unique identification information:
   (1.1) respectively adding five fields namely, ID, X, Y, shape feature value, and coordinate system description to a space vector layer in the spatial data for national territorial spatial planning for controlling abrupt changes by the higher-level user and a space vector layer in the spatial data for national territorial spatial planning requested for comparison by the lower-level user, wherein the ID field is of a text type, the X field and the Y field are of an integer type, the shape feature value field is of a double precision type, and the coordinate system description field is of a text type;
   (1.2) calculating the X field as a horizontal coordinate value of the centroid of each element in the space vector layer, retaining 2 decimal places, calculating the Y field as a vertical coordinate value of the centroid of each element in the space vector layer, retaining 2 decimal places, and calculating the shape feature value field as a pattern associated value of each element in the space vector layer, and the ID field as a combined string of the X field, the Y field, and the shape feature value field connected using a hyphen, wherein the ID field is the unique identification information; for example, X is 349087.34, Y is 35452784.98, the shape feature value is 34.557875, and the connection symbol is "-", then the ID field value is 349087.34-35452784.98-34.557875, and the ID field is the unique identification information for detecting abrupt changes in spatial data of both the higher and lower level users.
   (1.3) calculating the coordinate system description fields of the space vector layer for controlling abrupt changes and the space vector layer requested for comparison as space coordinate system names of the space vector layers, e.g., geographic coordinate system types such as GCS_China_Geodetic_Coordinate_System_2000 or projection coordinate system types such as CGCS2000_3_Degree_GK_CM_ 99E.
   (1.4) combining the space vector layer for controlling abrupt changes and an attribute field for controlling abrupt changes required by a higher-level user by the ID field to form an abrupt-change-control attribute database that contains unique identification information; and combining the space vector layer requested for comparison by a lower-level user and an attribute field requested for comparison by a lower-level user by the ID field to form a comparison-request attribute database that contains unique identification information;
(2) detecting abrupt changes: connecting the abrupt-change-control attribute database and the comparison-request attribute database by the unique identification information, and detecting records and causes for abrupt changes through quantity counting and attribute comparison, which are compiled into an abrupt-change-detection result database, wherein the "record" in this embodiment is a "map spot":
   (2.1) counting the number of records in the comparison-request attribute database of a lower-lever user;
   (2.2) obtaining an abrupt-change-control attribute database of a higher-level user, counting the number of records in the abrupt-change-control attribute database, comparing the number of records in the comparison-request attribute database with the number of records in the abrupt-change-control attribute database, determining whether the comparison result is consistent; if inconsistent, then determining that abrupt changes have occurred in the spatial data for national territorial spatial planning requested for comparison by a lower-level user, and recording the cause for such abrupt changes as "inconsistent number of map spots", and then registering and compiling the causes for such abrupt changes into the abrupt-change-detection result database; and if consistent, then proceeding to step (2.3);
   (2.3) performing a left join query with respect to the abrupt-change-control attribute database and the comparison-request attribute database using the ID field with unique identification information:
      for example, Select abrupt-change-control attribute database.ID, abrupt-change-control attribute database.X, abrupt-change-control attribute database.Y, ......, comparison-request attribute database.ID, comparison-request attribute database.X, comparison-request attribute database.Y ...... from abrupt-change-control attribute database Left Join comparison-request attribute database on abrupt-change-control attribute database.ID = comparison-request attribute database.ID.
      (2.3.1) determining whether all records in the abrupt-change-control attribute database have corresponding values in the comparison-request attribute database; if not, then determining that abrupt changes have occurred in the spatial data for the national territorial spatial planning requested for comparison, and recording the cause for such abrupt changes as "ID fields are not in one-to-one correspondence", and then compiling the ID values of the abrupt-change-control attribute database that do not have corresponding values and the causes for such error into the abrupt-change-detection result database;
      (2.3.2) reading an attribute field required by a higher-level user for controlling abrupt changes in the abrupt-change-control attribute database, searching for a field of the same name in the comparison-request attribute database, and reading the field type and field value: determining whether the name of the attribute field required by a higher-level user for controlling abrupt changes in the abrupt-change-control attribute database matches that in the comparison-request attribute database; if inconsistent, then determining that abrupt changes have occurred in the spatial data for national territorial spatial planning requested for comparison, and recording the cause for such abrupt changes as "missing required field name", and then compiling the current ID value of the comparison-request attribute database and causes for such error into the abrupt-change-detection result database;
      (2.3.3) determining whether the field type of the attribute field required by a higher-level user for controlling abrupt changes in the abrupt-change-control attribute database is consistent with the field type of a field with the same name in the comparison-request attribute database; if inconsistent, then determining that abrupt changes have occurred in the spatial data for national territorial spatial planning requested for comparison, and recording the cause for such abrupt changes as "inconsistent field type of the required factor field", and then compiling the current ID value of the comparison-request attribute database and causes for such error into the abrupt-change-detection result database;
      (2.3.4) determining whether the precision of the attribute field required by a higher-level user for controlling abrupt changes in the abrupt-change-control attribute database and the field of the same name in the comparison-request attribute database are consistent; if inconsistent, then determining that abrupt changes have occurred in the spatial data for national territorial spatial planning of the space vector layer requested for comparison, and recording the cause for such abrupt changes as "inconsistent precision of the required factor field", and then compiling the current ID value of the comparison-request attribute database and causes for such error into the abrupt-change-detection result database;
      (2.3.5) determining whether the field value of the attribute field required by a higher-level user for controlling abrupt changes in the abrupt-change-control attribute database is consistent with the field value of a field with the same name in the comparison-request attribute database; if inconsistent, then determining that abrupt changes have occurred in the spatial data for national territorial spatial planning of the space vector layer requested for comparison, and recording the cause for such abrupt changes as "inconsistent field value of the required factor field", and then compiling the current ID value of the comparison-request attribute database and causes for such error into the abrupt-change-detection result database;
   (2.4) reading the value of the coordinate system description field of the abrupt-change-control attribute database and comparing same with the value of the coordinate system description field of the comparison-request attribute database, then determining whether the value of the coordinate system description field of the comparison-request attribute database is consistent with the value of the coordinate system description field of the abrupt-change-control attribute database; if inconsistent, then determining that abrupt changes have occurred in the spatial data for national territorial spatial planning requested for comparison, and recording the cause for such abrupt changes as "inconsistent coordinate system description information", and then registering and compiling the causes for such abrupt changes into the abrupt-change-detection result database; and
   (2.5) outputting the records of the abrupt-change-detection result database and show the abrupt changes detection results to the lower-lever user.

It should be noted that the element described in step 1.2 refers to a piece of information in the space vector layer, which includes spatial information and attribute information. In addition, each space vector layer has a spatial coordinate system, and this spatial coordinate system consists of coordinate system name, central meridian, geographic coordinate system, etc. The coordinate system name of the coordinate system in step 1.3 is calculated as a coordinate system description field for storage, which is used for subsequent comparison. The ID, X, Y, shape feature value, and coordinate system description fields added in step 1.4 are used to detect the changes in spatial data patterns, but some attribute fields in the spatial data for national territorial spatial planning should also be controlled, which is determined by the specific situation. At this point, the attribute fields required for controlling abrupt changes need to be selected, and then these are selected together with the ID, X, Y, shape feature value, and coordinate system description fields to form an attribute database. The record in step 2.1 refers to a piece of information in the attribute database, which includes only the attribute information, and does not include the spatial information. Therefore, the records are different from the elements.

Based on the above embodiment, in another embodiment of the present invention, in said step (1.2), the type of the space vector layer for controlling abrupt changes and space vector layer requested for comparison in the spatial data for national territorial spatial planning is determined, and if the space vector layer is a polygon layer, then the shape feature value field is calculated as the area of a space vector layer element and the area retains 4 decimal places; and if the space vector layer is a line layer, then the shape feature value field is calculated as the length of a space vector layer element and the length retains 4 decimal places; while if the space vector layer is a point layer, then the shape feature value field is calculated as a null value.

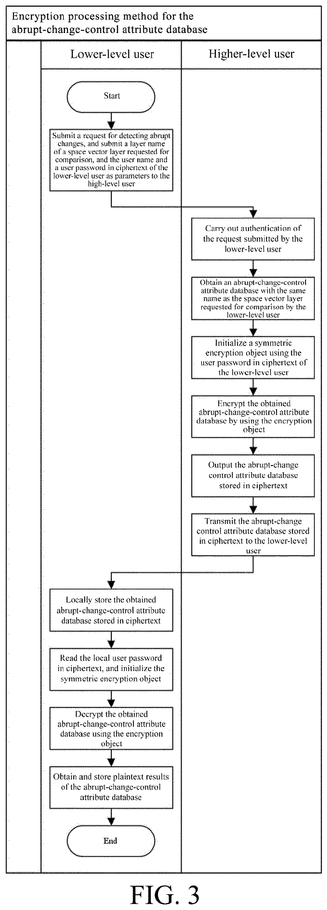

Based on the above embodiment, in another embodiment of the present invention, as shown in Fig. 3, steps of encrypting the abrupt-change-control attribute database are further included between said step (1) and step (2):
S 1 the lower-level user submits a request for detecting abrupt changes, and submits a layer name of the space vector layer requested for comparison, and the user name and a user password in ciphertext of the lower-level user as parameters to the high-level user;
S2 the higher-level user carries out authentication of the request submitted by the lower-level user, and uses the user name and the user password in ciphertext submitted by the lower-level user to look up and compare in a user system of the higher-level user, and terminates the process directly if the authentication fails;
S3 after the authentication is successful, the higher-level user obtains an abrupt-change-control attribute database with the same name as the space vector layer requested for comparison by the lower-level user in the abrupt-change-control attribute databases;
S4 the higher-level user initializes a symmetric encryption object using the user password in ciphertext of the lower-level user; herein the encryption object uses a symmetric encryption algorithm, and the commonly used algorithms are DES, 3DES, etc.
S5 the higher-level user encrypts the obtained abrupt-change-control attribute database by using the encryption object;
S6 the higher-level user outputs the abrupt-change-control attribute database stored in ciphertext;
S7 the higher-level user transmits the abrupt-change-control attribute database stored in ciphertext to the lower-level user;
S8 the lower-level user locally stores the abrupt-change-control attribute database stored in ciphertext obtained from the high-level user;
S9 the lower-level user reads the local user password in ciphertext, and initializes the symmetric encryption object, at which point the algorithm employed by the encryption object is the same as in S4;
S10 the obtained abrupt-change-control attribute database is decrypted using the encryption object; and
S11 plaintext results of the abrupt-change-control attribute database are obtained and stored.

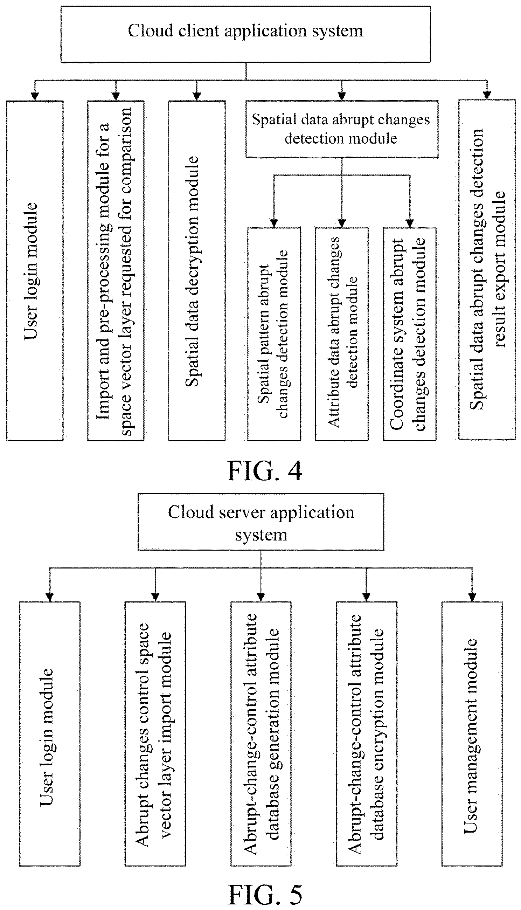

The present invention further provides an application system for controlling abrupt changes in spatial data for national territorial spatial planning, and the embodiment is as follows: said application system for controlling abrupt changes in spatial data for national territorial spatial planning includes a cloud client application system and a cloud server application system, and the structure of said cloud client application system is as shown in Fig. 4, including: a user login module for user registration and login to the cloud client application system; an import and pre-processing module for a space vector layer requested for comparison for a user to import a local space vector layer requested for comparison according to a list of spatial data that must be used according to the requirements of national territorial spatial planning, and completing pre-processing of the imported data after completing such import, and providing error notifications for missing spatial data that have not been imported; a spatial data decryption module for decrypting the abrupt-change-control attribute database stored in ciphertext that has been requested to be obtained, using steps in the abrupt-change-control attribute database encryption process and the user password in ciphertext as a private key, and then obtaining and storing the plaintext results of the abrupt-change-control attribute database; a spatial data abrupt changes detection module for comparing the comparison-request attribute database with the obtained abrupt-change-control attribute database in terms of spatial patterns, attribute factors and coordinate systems, using steps for detecting abrupt changes in spatial data for national territorial spatial planning, and then detecting whether there are abrupt changes in the spatial vector layer requested for comparison; and a spatial data abrupt changes detection result export module for a user to export the abrupt changes detection results.

A user may use the spatial data abrupt changes detection result export module to export the abrupt changes detection result as a result file in doc, xls, txt and other formats to show users recorded information such as the ID value and causes for error for such abrupt changes in the comparison-request attribute database.

Based on the above embodiment, as in Figure 4, said spatial data abrupt changes detection module includes: a spatial pattern abrupt changes detection module for detecting the number of map spots and inconsistencies in patterns; an attribute data abrupt changes detection module for detecting attribute field names, types, precisions and inconsistencies in attribute values; and a coordinate system abrupt changes detection module for detecting inconsistent coordinate system description information.

The structure of said cloud server application system is as shown in Fig. 5, including: a user login module for user registration and login to the cloud server application system; an abrupt changes control space vector layer import module for a user to import a user's local space vector layer for controlling abrupt changes according to a list of spatial data required for controlling abrupt changes by national territorial spatial planning; an abrupt-change-control attribute database generation module for a user to select a space vector layer for controlling abrupt changes and the attribute fields required for controlling abrupt changes in each space vector layer for controlling abrupt changes, completing pre-processing of imported data using steps for pre-processing data for detecting abrupt changes, and generating an abrupt-change-control attribute database; an abrupt-change-control attribute database encryption module for using the obtained lower-level user password in ciphertext as a private key to symmetrically encrypt the contents of the abrupt-change-control attribute database, using steps in the abrupt-change-control attribute database encryption process, when receiving a request for accessing and obtaining the abrupt-change-control attribute database, and encrypting the abrupt-change-control attribute database into an abrupt-change-control attribute database stored in ciphertext before transmission; a user management module for storing and managing user information including user names and passwords of the cloud application system and the cloud server application system, wherein the user password is stored in the form of a ciphertext.

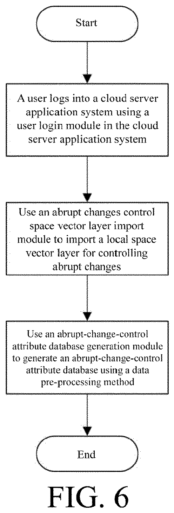

The application method and process in the abrupt changes control application system of spatial data for national territorial spatial planning are divided into two steps: generating an abrupt-change-control attribute database and detecting and analyzing abrupt changes in a spatial vector layer requested for comparison. The abrupt-change-control attribute database generation process is as shown in Fig. 6, with the following steps:
1. a user logs in to a cloud server application system using a user login module in the cloud server application system;
2. use an abrupt changes control space vector layer import module to import a local space vector layer for controlling abrupt changes; and
3. use an abrupt-change-control attribute database generation module to generate an abrupt-change control attribute database using a data pre-processing method.

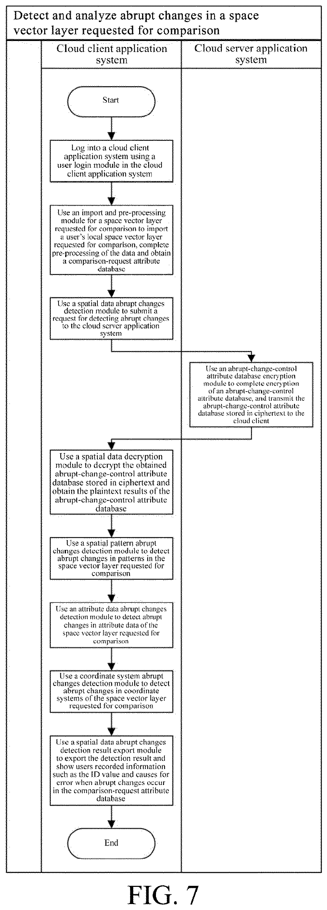

The abrupt changes detection and analysis process for a space vector layer requested for comparison is as shown in Fig. 7, and the steps are as follows:
1. a lower-level user logs into a cloud client application system using a user login module in the cloud client application system;
2. the lower-level user uses an import and pre-processing module for a space vector layer requested for comparison in the cloud client application system to import a user's local space vector layer requested for comparison, completes pre-processing of the data and obtains a comparison-request attribute database;
3. the lower-level user uses a spatial data abrupt changes detection module to submit a request for detecting abrupt changes to the cloud server application system;
4. the cloud server application system obtains parameters such as the user name, user password key, name of space vector layer requested for comparison submitted by the cloud client system, uses the abrupt-change-control attribute database encryption module to complete the encryption of abrupt-change-control attribute database, and transmits the abrupt-change-control attribute database stored in ciphertext to the cloud client;
5. after the cloud client application system obtains the data, the lower-level user uses the spatial data decryption module in the cloud client application system to decrypt the obtained abrupt-change-control attribute database stored in ciphertext and obtain the plaintext results of the abrupt-change-control attribute database;
6. the lower-level user uses the spatial pattern abrupt changes detection module in the cloud client application system to detect abrupt changes in patterns in the space vector layer requested for comparison;
7. the lower-level user uses the attribute data abrupt changes detection module in the cloud client application system to detect abrupt changes in attribute data of the space vector layer requested for comparison;
8. the lower-level user uses the coordinate system abrupt changes detection module in the cloud client application system to detect abrupt changes in coordinate systems of the space vector layer requested for comparison; and
9. the lower-level user uses the spatial data abrupt changes detection result export module in the cloud client application system to export the detection result and show users recorded information such as the ID value and causes for error when abrupt changes occur in the comparison-request attribute database.

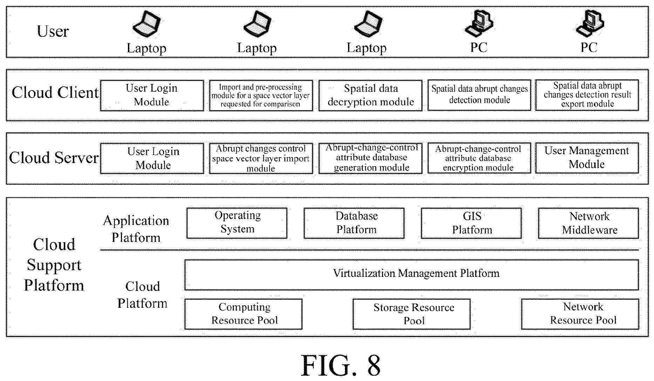

The present invention further provides a cloud platform system for controlling abrupt changes in spatial data for national territorial spatial planning, and the embodiment is as follows, as shown in Fig. 8, the cloud platform system is deployed with any of the above described application system for controlling abrupt changes in spatial data for national territorial spatial planning, including: a cloud client deployed with said cloud client application system; a cloud server deployed with said cloud server application system, so as to provide data comparison services for the cloud client application system; and a cloud support platform for providing computing, storage, network communication and system operation capability support for the cloud client application system and cloud server application system.

Based on the above embodiment, in another embodiment of the present invention, as in shown in Fig. 8, said cloud client includes and is not limited to a PC, a mobile laptop, and computing and storage terminals in a graphics workstation deployed with the cloud client application system.

Based on the above embodiment, in another embodiment of the present invention, as shown in Fig. 8, said cloud support platform includes an X86 computing server for building a pool of computing resources, a storage server for building a pool of storage resources, a network server and gateway device for building a pool of network resources, virtualization platform software for virtualization management of resources, and one or more application platforms for deploying operating systems, database platforms, GIS platforms, and network middleware on the platform.

The above described are only preferred embodiments of the present invention, and it should be noted that for a person of ordinary skills in the art, a number of improvements and modifications may be made without departing from the principles of the present invention, and these improvements and modifications should also be considered to be within the protection scope of the present invention.

## Claims

1. A method for detecting abrupt changes in spatial data for national territorial spatial planning, comprising the steps of:
(1) pre-processing data for detecting abrupt changes: spatial data for national territorial spatial planning for controlling abrupt changes by a higher-level user and spatial data for national territorial spatial planning requested for comparison by a lower-level user are both converted by a space vector layer to an attribute database containing unique identification information:
(1.1) respectively adding five fields namely, ID, X, Y, shape feature value, and coordinate system description to a space vector layer in the spatial data for national territorial spatial planning for controlling abrupt changes by the higher-level user and a space vector layer in the spatial data for national territorial spatial planning requested for comparison by the lower-level user, wherein the ID field is of a text type, the X field and the Y field are of an integer type, the shape feature value field is of a double precision type, and the coordinate system description field is of a text type;
(1.2) calculating the X field as a horizontal coordinate value of the centroid of each element in the space vector layer, the Y field as a vertical coordinate value of the centroid of each element in the space vector layer, the shape feature value field as a pattern associated value of each element in the space vector layer, and the ID field as a combined string of the X field, the Y field, and the shape feature value field connected using a hyphen, wherein the ID field is the unique identification information;
(1.3) calculating the coordinate system description fields of the space vector layer for controlling abrupt changes and the space vector layer requested for comparison as space coordinate system names of the space vector layers;
(1.4) combining the space vector layer for controlling abrupt changes and an attribute field for controlling abrupt changes required by the higher-level user by the ID field to form an abrupt-change-control attribute database that contains unique identification information; and combining the space vector layer requested for comparison by the lower-level user and an attribute field requested for comparison by the lower-level user by the ID field to form a comparison-request attribute database that contains unique identification information;
(2) detecting abrupt changes: connecting the abrupt-change-control attribute database and the comparison-request attribute database by the unique identification information, and detecting records and causes for abrupt changes through quantity counting and attribute comparison, which are compiled into an abrupt-change-detection result database;
(2.1) counting the number of records in the comparison-request attribute database of the lower-lever user;
(2.2) obtaining the abrupt-change-control attribute database of the higher-level user, counting the number of records in the abrupt-change-control attribute database, comparing the number of records in the comparison-request attribute database with the number of records in the abrupt-change-control attribute database, determining whether the comparison result is consistent; if inconsistent, then determining that abrupt changes have occurred in the spatial data for national territorial spatial planning requested for comparison by the lower-level user, and recording the cause for such abrupt changes as "inconsistent number of map spots", and then registering and compiling the causes for such abrupt changes into the abrupt-change-detection result database; and if consistent, then proceeding to step (2.3);
(2.3) performing a left join query with respect to the abrupt-change-control attribute database and the comparison-request attribute database using the ID field with unique identification information:
(2.3.1) determining whether all records in the abrupt-change-control attribute database have corresponding values in the comparison-request attribute database; if not, then determining that abrupt changes have occurred in the spatial data for the national territorial spatial planning requested for comparison, and recording the cause for such abrupt changes as "ID fields are not in one-to-one correspondence", and then compiling the ID values of the abrupt-change-control attribute database that do not have corresponding values and causes for such error into the abrupt-change-detection result database;
(2.3.2) reading an attribute field required by the higher-level user for controlling abrupt changes in the abrupt-change-control attribute database, searching for a field of the same name in the comparison-request attribute database, and reading the field type and field value: determining whether the name of the attribute field required by the higher-level user for controlling abrupt changes in the abrupt-change-control attribute database matches that in the comparison-request attribute database; if inconsistent, then determining that abrupt changes have occurred in the spatial data for national territorial spatial planning requested for comparison, and recording the cause for such abrupt changes as "missing required field name", and then compiling the current ID value of the comparison-request attribute database and causes for such error into the abrupt-change-detection result database;
(2.3.3) determining whether the field type of the attribute field required by the higher-level user for controlling abrupt changes in the abrupt-change-control attribute database is consistent with the field type of a field with the same name in the comparison-request attribute database; if inconsistent, then determining that abrupt changes have occurred in the spatial data for national territorial spatial planning requested for comparison, and recording the cause for such abrupt changes as "inconsistent field type of the required factor field", and then compiling the current ID value of the comparison-request attribute database and causes for such error into the abrupt-change-detection result database;
(2.3.4) determining whether the precision of the attribute field required by the higher-level user for controlling abrupt changes in the abrupt-change-control attribute database and a field of the same name in the comparison-request attribute database are consistent; if inconsistent, then determining that abrupt changes have occurred in the spatial data for national territorial spatial planning of the space vector layer requested for comparison, and recording the cause for such abrupt changes as "inconsistent precision of the required factor field", and then compiling the current ID value of the comparison-request attribute database and causes for such error into the abrupt-change-detection result database;
(2.3.5) determining whether the field value of the attribute field required by the higher-level user for controlling abrupt changes in the abrupt-change-control attribute database is consistent with the field value of a field with the same name in the comparison-request attribute database; if inconsistent, then determining that abrupt changes have occurred in the spatial data for national territorial spatial planning of the space vector layer requested for comparison, and recording the cause for such abrupt changes as "inconsistent field value of the required factor field", and then compiling the current ID value of the comparison-request attribute database and causes for such error into the abrupt-change-detection result database;
(2.4) reading the value of the coordinate system description field of the abrupt-change-control attribute database and comparing same with the value of the coordinate system description field of the comparison-request attribute database, then determining whether the value of the coordinate system description field of the comparison-request attribute database is consistent with the value of the coordinate system description field of the abrupt-change-control attribute database; if inconsistent, then determining that abrupt changes have occurred in the spatial data for national territorial spatial planning requested for comparison, and recording the cause for such abrupt changes as "inconsistent coordinate system description information", and then registering and compiling the cause for such abrupt changes into the abrupt-change-detection result database; and
(2.5) outputting records of the abrupt-change-detection result database.

2. The method for detecting abrupt changes in spatial data for national territorial spatial planning according to claim 1, wherein in said step (1.2), the type of the space vector layer for controlling abrupt changes and the space vector layer requested for comparison in the spatial data for national territorial spatial planning is determined, and if the space vector layer is a polygon layer, then the shape feature value field is calculated as the area of a space vector layer element, and if the space vector layer is a line layer, then the shape feature value field is calculated as the length of a space vector layer element; while if the space vector layer is a point layer, then the shape feature value field is calculated as a null value.

3. The method for detecting abrupt changes in spatial data for national territorial spatial planning according to claim 1, wherein steps of encrypting the abrupt-change-control attribute database are further included between said step (1) and step (2):
Sl the lower-level user submits a request for detecting abrupt changes, and submits a layer name of the space vector layer requested for comparison, and the user name and a user password in ciphertext of the lower-level user as parameters to the high-level user;
S2 the higher-level user carries out authentication of the request submitted by the lower-level user, and uses the user name and the user password in ciphertext submitted by the lower-level user to look up and compare in a user system of the higher-level user, and terminates the process directly if the authentication fails;
S3 after the authentication is successful, the higher-level user obtains an abrupt-change-control attribute database with the same name as the space vector layer requested for comparison by the lower-level user in the abrupt-change-control attribute databases;
S4 the higher-level user initializes a symmetric encryption object using the user password in ciphertext of the lower-level user;
S5 the higher-level user encrypts the obtained abrupt-change-control attribute database by using the encryption object;
S6 the higher-level user outputs the abrupt-change-control attribute database stored in ciphertext;
S7 the higher-level user transmits the abrupt-change-control attribute database stored in ciphertext to the lower-level user;
S8 the lower-level user locally stores the abrupt-change-control attribute database stored in ciphertext obtained from the high-level user;
S9 the lower-level user reads the local user password in ciphertext, and initializes the symmetric encryption object, at which point the algorithm employed by the encryption object is the same as in S4;
S10 the obtained abrupt-change-control attribute database is decrypted using the encryption object; and
S11 plaintext results of the abrupt-change-control attribute database are obtained and stored.

4. An application system **characterized in that** the application system is used for data processing using the method for detecting abrupt changes in spatial data for national territorial spatial planning according to claim 3, comprising a cloud client application system and a cloud server application system, and the cloud client application system comprising:
a user login module for user registration and login to the cloud client application system;
an import and pre-processing module for a space vector layer requested for comparison for a user to import a local space vector layer requested for comparison according to a list of spatial data that must be used according to the requirements of national territorial spatial planning, and completing pre-processing of the imported data after completing such import, and providing error notifications for missing spatial data that have not been imported;
a spatial data decryption module for decrypting the abrupt-change-control attribute database stored in ciphertext that has been requested to be obtained using the user password in ciphertext as a private key, and obtaining and storing the plaintext results of the abrupt-change-control attribute database;
a spatial data abrupt changes detection module for comparing the comparison-request attribute database with the obtained abrupt-change-control attribute database in terms of spatial patterns, attribute factors and coordinate systems, and detecting whether there are abrupt changes in the spatial vector layer requested for comparison; and
a spatial data abrupt changes detection result export module for a user to export the abrupt changes detection results.

5. The application system according to claim 4, wherein the spatial data abrupt changes detection module comprises:
a spatial pattern abrupt changes detection module for detecting the number of map spots and inconsistencies in patterns;
an attribute data abrupt changes detection module for detecting attribute field names, types, precisions and inconsistencies in attribute values; and
a coordinate system abrupt changes detection module for detecting inconsistent coordinate system description information.

6. The application system according to claim 5, wherein the cloud server application system comprises:
a user login module for user registration and login to the cloud server application system;
an abrupt changes control space vector layer import module for a user to import a user's local space vector layer for controlling abrupt changes according to a list of spatial data required for controlling abrupt changes by national territorial spatial planning;
an abrupt-change-control attribute database generation module for a user to select a space vector layer for controlling abrupt changes and the attribute fields required for controlling abrupt changes in each space vector layer for controlling abrupt changes, completing pre-processing of imported data, and generating an abrupt-change-control attribute database;
an abrupt-change-control attribute database encryption module for using the obtained lower-level user password in ciphertext as a private key to symmetrically encrypt the content of the abrupt-change-control attribute database when receiving a request for accessing and obtaining the abrupt-change-control attribute database, and encrypting the abrupt-change-control attribute database into an abrupt-change-control attribute database stored in ciphertext before transmission; and
a user management module for storing and managing user information including user names and passwords of the cloud application system and the cloud server application system, wherein the user password is stored in the form of a ciphertext.

7. A cloud platform system, **characterized in that** the application system according to any one of claims 4 to 6 is deployed, comprising:
a cloud client deployed with the cloud client application system;
a cloud server deployed with the cloud server application system, so as to provide data comparison services for the cloud client application system; and
a cloud support platform for providing computing, storage, network communication and system operation capability support for the cloud client application system and the cloud server application system.

8. The cloud platform system according to claim 7, wherein the cloud client comprises and is not limited to a PC, a mobile laptop, and computing and storage terminals in a graphics workstation deployed with the cloud client application system.

9. The cloud platform system according to claim 7, wherein the cloud support platform comprises an X86 computing server for building a pool of computing resources, a storage server for building a pool of storage resources, a network server and gateway device for building a pool of network resources, virtualization platform software for virtualization management of resources, and one or more application platforms for deploying operating systems, database platforms, GIS platforms, and network middleware on the platform.
